# EUROPÄISCHE PATENTSCHRIFT

(11) **EP 1 371 474 B1**
(45) Veröffentlichungstag und Bekanntmachung des Hinweises auf die Patenterteilung: **07.01.2004**
(21) Anmeldenummer: 02015925.7
(22) Anmeldetag: 17.07.2002
(51) Int. Cl.: B29C 65/10

(54) **Schweissautomat**
Automatic welding apparatus
Automate de soudage

(43) Veröffentlichungstag der Anmeldung: 17.12.2003
(73) Patentinhaber: Leister Process Technologies, 6060 Sarnen (CH)
(72) Erfinder: Zurmühle, Walter, 6056 Kägiswil (CH); von Wyl, Bruno, 6056 Kägiswil (CH)
(74) Vertreter: Klocke, Peter, Dipl.-Ing.

(56) Entgegenhaltungen:
- EP-A- 0 300 209
- CH-A- 465 197
- DE-A- 10 032 450
- US-A- 3 080 910
- US-A- 4 440 588

## Beschreibung

Die vorliegende Erfindung betrifft einen Schweißautomaten für flächige Kunststoffmaterialien mit einem Fahrgestell und daran angeordneter Schweißeinrichtung, Antriebseinheit, Andrückeinrichtungen für die überlappend verschweißten Materialien.

Derartige Schweißautomaten sind allgemein bekannt und im Einsatz und werden zum Schweißen von Planen aus beschichtetem Gewebe, Folien und Dichtungsbahnen aus PVC-P, PE, ECB, CSPE, EPDM, PVDF etc sowie PE-beschichtete Bändchengewebe für Lastwagen, Zelte, Abdeckungen in der Landwirtschaft, Biotope, Schwimmbäder, Markisen, Bootsplanen, aufblasbare Boote, Werbeplanen etc eingesetzt. Weitere ähnliche Materialien kommen im Tiefbau, Dachbau oder Fußboden vor. Im Nachfolgenden werden diese als (flächige) Kunststoffmaterialen bezeichnet. Die Kunststoffmaterialien werden zum Verschweißen überlappend angeordnet, so dass in einem Überlappungsbereich die beiden Kunststoffmaterialien aufeinander liegen und als ein oberes Kunststoffmaterial und ein unteres Kunststoffmaterial bezeichnet werden. Es ist auch möglich, dass die miteinander zu verschweißenden Kunststoffmaterialen auf Stoß gelegt werden und ein Streifen, der beide untere Lagen in einem Überlappungsbereich überdeckt, mit dem jeweils unteren Kunststoffmaterial verschweißt wird. Auch hier sind die bekannten Schweißautomaten einsetzbar.

Als Schweißeinrichtungen können Heißluftschweißgeräte, Heizkeilschweißgeräte oder Kombinationen daraus verwendet werden.

In der EP-A1-949 057 ist ein Schweißautomat dargestellt, wie er insbesondere zum Verschweißen von Kunststoffdichtungsbahnen auf Dächern verwendet wird. Diese bekannten und auf dem Markt erhältlichen Schweißautomaten weisen ein Fahrgestell auf, an dem eine Schweißeinrichtung schwenkbar von einer Ruhestellung in eine Arbeitsstellung angeordnet ist. Des Weiteren weisen diese Schweißautomaten Transportrollen auf, mit denen der Schweißautomat in die jeweilige Arbeitsposition gefahren und auf die Schweißnaht ausgerichtet werden kann. Diese Transportrollen sind gemäß dem Stand der Technik zumindest im hinteren Bereich mittels eines Mechanismus in vertikaler Richtung verstellbar, um in der Schweißstellung das Gewicht des Schweißautomaten von den Transportrollen zu nehmen und auf die Antriebseinheit und die Andrückeinrichtung zu übertragen. Bei der bekannten Einrichtung sind die Antriebseinheit und die Andrückeinrichtung in einer Antriebs- und Andrückrolle vereint. Als Führungseinrichtung befindet sich bei den bekannten Geräten im vorderen Bereich ein Führungsrad, das während des Schweißvorgangs eine Zeigerfunktion wahrnimmt, um dem Bediener die Spur, die gerade geschweißt wird, aufzuzeigen. Das Führungsrad übernimmt kein Gewicht.

Des weiteren sind Schweißautomaten zum Verschweißen von Kunststofffolien bekannt, bei denen die Schweißeinrichtung direkt am Gehäuse angeordnet ist und daher zu den hinteren Antriebs- und Andrückrollen eine (lenkbare) Transportrolle aufweisen.

Bei den für Kunststoffplanen oder -folien, d. h. dünneren und feineren Materialien, eingesetzten Schweißautomaten entsteht das Problem, dass trotz genauer Justierung des Schweißautomaten entlang der Schweißnaht der Schweißautomat hinsichtlich der Spur immer wieder korrigiert werden muss. Dies führt dazu, dass die Schweißverbindung schon allein optisch mehr eine Slalomlinie darstellt, und darüber hinaus durch die teilweise schräge Bewegung mittels der Antriebs-/Andrückrolle entlang der Kante des überlappenden Materials Falten entstehen.

Der vorliegenden Erfindung liegt daher die Aufgabe zugrunde, einen Schweißautomat vorzuschlagen, der weitgehend spurtreu ist und damit eine erhöhte Schweißnahtqualität gewährleistet.

Diese Aufgabe wird erfindungsgemäß für einen Schweißautomat mit den Merkmalen des Anspruchs 1 gelöst. Weitere vorteilhafte Ausgestaltungen sind den Unteransprüchen zu entnehmen.

Bei dem erfindungsgemäßen Schweißautomat wird das Fahrgestell in der Schweißstellung außer von der Antriebseinheit und der Andrückeinrichtung von einem Führungsrad getragen. In bekannter Weise liegt damit das Hauptgewicht auf der Antriebseinheit und der Andrückeinrichtung, wobei jedoch im Unterschied zu den bekannten Einrichtungen zur Stützung des Fahrgestells ein starres Führungsrad im vorderen oder hinteren Bereich das Gewicht mitträgt. Das Gewicht liegt somit hauptsächlich auf der Andrückeinrichtung und der Antriebseinrichtung (z.B. einer angetriebenen Andrückrolle) und dem Führungsrad. Seitlich des Führungsrades und der Antriebseinheit und der Andrückeinrichtung kann sich zur Abstützung und zur Vermeidung von Umkippen je nach Ausgestaltung des Fahrgestells eine weitere Rolle, beispielsweise eine Lenkrolle, die gleichzeitig als Transportrolle dienen kann, befinden. Diese hat im wesentlichen eine Stützfunktion. In Bezug zu einer im wesentlichen auf dem verschweißten Überlappungsbereich laufenden Andrückrolle ist das Führungsrad derart angeordnet ist, dass es beim Schweißen parallel der Kante des oberen Kunststoffmaterials auf dem unteren Kunststoffmaterial entlang läuft und sich in dieses eindrückt.

Die Achse des Führungsrades und einer Andrückrolle und Antriebsrolle als Andrück- und Antriebseinrichtung sind parallel zueinander angeordnet. Vor dem Schweißbeginn kann der Schweißautomat einmalig mit den Achsen senkrecht zur Kante des oberen Kunststoffmaterials ausgerichtet werden. Er hält die Ausrichtung während des Schweißvorgangs und der Vorwärtsbewegung automatisch bei und ein Wegdriften wird verhindert. Das Führungsrad, das beim Stand der Technik nur eine Zeigerfunktion wahrgenommen hat, hat jetzt eine Führungsfunktion bei der Vorwärtsbewegung des Schweißautomaten übernommen.

Es ist klar, dass die Anordnung des Führungsrads dem Fahrgestell vorgelagert (vorne oder hinten) um so besser die Führungsfunktion übernehmen kann, je weiter es von den Auflagerollen der Antriebseinheit und Andrückeinrichtung entfernt ist. Grundsätzlich sind noch andere Auflagerollen möglich, wobei jedoch die Anordnung der Auflagenrollen (Andrückrollen und Führungsrad) in der angegebenen Relation zu einander als starre Rollen als die für das Funktionsprinzip wesentliche Anordnung angesehen werden. Weitere Abänderungen durch zusätzliche Rollen sind aufwendiger und tragen nicht zur Verbesserung des Prinzips bei.

Bei Versuchen hat sich überraschenderweise gezeigt, dass ein derartiger Schweißautomat absolut spurtreu ist. Bei richtiger Einstellung braucht der Bediener keinerlei Korrekturen mehr vorzunehmen und der Schweißautomat läuft entlang der Schweißnaht. Infolgedessen ergibt sich eine erhöhte Schweißnahtqualität und auch optisch eine eindeutige Verbesserung der Schweißnaht. Faltenbildung wird vermieden. Da keine weiteren Korrekturen erfolgen müssen, ist der Schweißautomat auch extrem bedienerfreundlich.

Das Führungsrad weist vorzugsweise eine schmale Lauffläche auf, so dass auf der mit dem Kunststoffmaterial in Berührung kommenden Lauffläche eine möglichst hohe Gewichtskraft (des von dem Führungsrad zu übernehmenden Gewichts) wirkt. Dies bewirkt, dass sich das Laufrad in das Kunststoffmaterial eindrückt. Um dies zu erreichen ist es auch möglich, ein breites Führungsrad mit (parallelen) schmalen Erhebungen oder Randierungen vorzusehen, die in ihrer gesamten Auflagefläche der Auflagefläche einer schmalen Lauffläche entsprechen. Von Bedeutung ist, dass eine Haftung zwischen dem Führungsrad und dem kunststoffmaterial quer zur Laufrichtung erreicht wird.

Sofern der Schweißautomat mit Transportrollen ausgestattet ist, damit er in der Transportstellung auch gut bewegbar und auf die Schweißlinie ausrichtbar ist, muss in der Schweißstellung eine Gewichtsübertragung auf das Führungsrad erfolgen. Hierzu ist das Führungsrad gemäß einer vorteilhaften Ausgestaltung gegenüber dem Fahrgestell in vertikaler Richtung verstellbar. Mit dieser Verstellung wird erreicht, dass in der Transportstellung das Gewicht des Fahrgestells auf der nächst liegenden Transportrolle, vorzugsweise einer Lenkrolle, liegt. In der Schweißstellung übernimmt das Führungsrad das Gewicht des Fahrgestells, wobei die nächstgelegene Transportrolle leicht vom Boden angehoben wird.

Wie vorstehend erwähnt, ist es vorteilhaft den Abstand der starren Andrückrolle und dem Führungsrad möglichst groß zu halten. Es ist deshalb vorteilhafter Weise das Führungsrad dem Fahrgestell vorgelagert. Dies wird vorzugsweise dadurch bewerkstelligt, dass das Führungsrad an einem um eine Achse schwenkbar gelagerten Schwenkarm gelagert und zumindest in der Schweißstellung am Fahrgestell arretierbar ist. Dies kann beispielsweise mittels Kurvenscheiben, Kniehebel, Feststellschrauben oder dergleichen und Federn als Rückstellkräfte realisiert werden.

Bei einem Fahrgestell mit seitlichen Fahrgestellarm für die Schweißeinrichtung seitlich des Führungsrades ist zweckmäßigerweise an dem Fahrgestellarm eine Transportlenkrolle angeordnet, um den Schweißautomaten zu stützen und gleichzeitig den Geradeauslauf nicht zu stören.

Bei einem Schweißautomaten ohne seitlichem Fahrgestellarm ist gemäß einer anderen vorteilhaften Ausbildung das Führungsrad gegenüber der Drehachse eines am Fahrgestell angeordneten Schwenkarmes exzentrisch gelagert. Damit kann bei dem bekannten Schweißautomat mit dem Schwenkarm einerseits die Schweißeinrichtung und andererseits das Führungsrad in die Schweißstellung gebracht werden. Die Transportrolle wird dadurch vom Boden abgehoben.

Zusammenfassend ist festzustellen, dass zusätzlich zu den bereits vorstehend erwähnten Vorteilen wie spurtreue entlang der Planenkante auch ein derartiger Schweißautomat weniger Störeinflüsse vom Untergrund unterliegt. Da der Bediener nicht zu führen braucht, kann er sich auf die Schweißnaht, d. h. die Düse und deren richtigen Verlauf konzentrieren. Infolgedessen ist auch die Schweißgeschwindigkeit gegenüber den bisherigen Automaten höher, da die vielen Korrekturen nicht erforderlich sind. Auch seitliche Störeinflüsse durch Einschwenken der Schweißdüse auf die Richtung sind geringer als vorher. Im Leerlauf ist eine erreichte Positionierbarkeit des gesamten Schweißautomaten gegeben.

Nachfolgend wird die Erfindung anhand der begleitenden Zeichnungen von Ausführungsbeispielen näher erläutert. Es stellen dar:
- Figur 1: eine perspektivische Ansicht eines ersten Ausführungsbeispiels des erfindungsgemäßen Schweißautomaten mit einem seitlichen Fahrgestellarm, Transportrollen und vorgelagertem Führungsrad in der Schweißstellung;
- Figur 2: eine perspektivische Ansicht des Schweißautomaten gemäß Figur 1 von unten;
- Figur 3: die vergrößerte Darstellung der Führungseinrichtung an dem Schweißautomat gemäß Figuren 1 und 2;
- Figur 4: die Führungseinrichtung gemäß Figur 3 in der Transportstellung;
- Figur 5: die Führungseinrichtung gemäß Figur 3 in der Schweißstellung;
- Figur 6: ein anderes Ausführungsbeispiel des erfindungsgemäßen Schweißautomaten mit einem Fahrgestell ohne seitlichem Fahrgestellarm und vorgelagerter Transportrolle sowie einem Führungsrad in Transportstellung;
- Figur 7: den Schweißautomat gemäß Figur 6 in Schweißstellung;
- Figur 8: den Schweißautomat gemäß Figur 6 von unten;
- Figur 9: eine vergrößerte Darstellung der Aufhängung. des Führungsrades und der Transportrolle in der Transportstellung;
- Figur 10: eine vergrößerte Darstellung der Aufhängung des Führungsrades und der Transportrolle in der Schweißstellung;
- Figur 11: eine vergrößerte Darstellung der Lagerung des Führungsrades an dem Schwenkarm für die Schweißeinrichtung, und
- Figur 12: ein andere Ausbildung eines Schweißautomats gemäß Figur 6 in drei verschiedenen Betriebszuständen (A, B, C) des Führungsrades mit einem zusätzlichen Mechanismus zum Entkopplen des Führungsrades in der Schweißstellung . sowie in einer Schnittdarstellung (D) der Lagerung des Führungsrades.

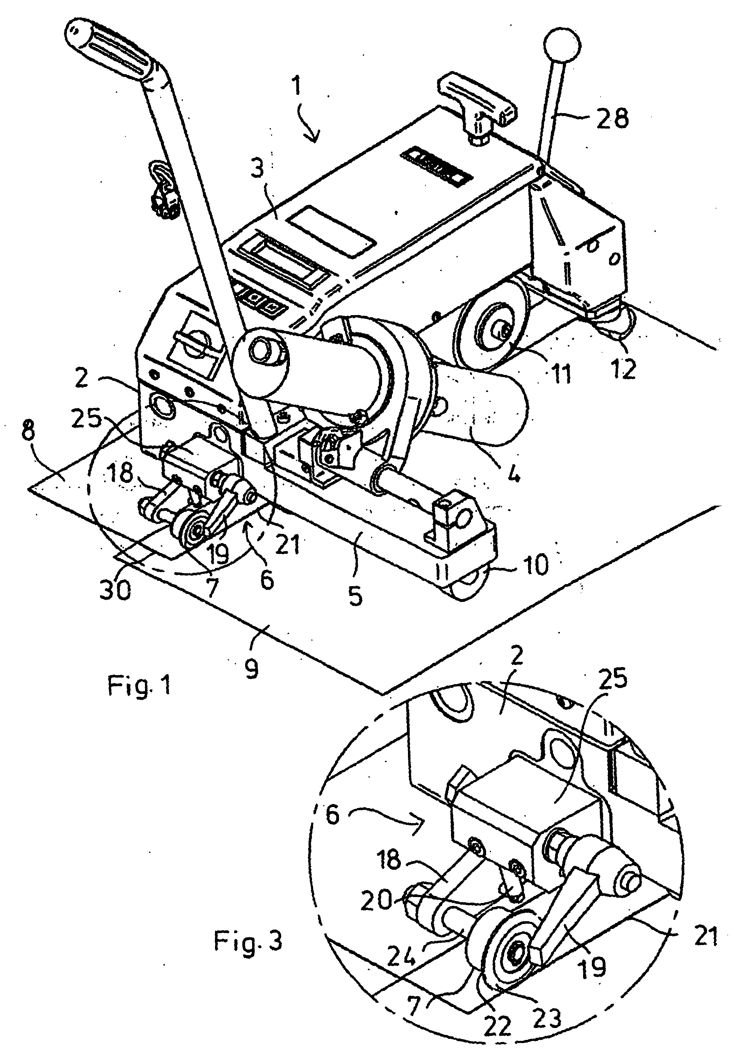

Figur 1 zeigt den Schweißautomat 1 mit dem Fahrgestell 2, das das Gehäuse 3 mit der Antriebseinheit und die Schweißeinrichtung 4 an einem seitlichen Fahrgestellarm 5 trägt. Dem Fahrgestell 2 vorgelagert befindet sich eine Führungseinrichtung 6 mit einem Führungsrad 7, das entlang der Kante 21 einer oberen Plane 8, die mit einer unteren Plane 9 zu verschweißen ist, entlang läuft. Die Antriebs- und Andrückrolle 11 läuft im wesentlichen auf dem Überlappungsbereich 30 (Schweißnahtbereich) der Planen 8 und 9. Der Schweißautomat 1 wird in dieser Schweißstellung von dem Führungsrad 7, der Transportrolle 10 am Fahrgestellarm 5 und der Antriebs- und Andrückrolle 11 getragen. Im hinteren Bereich sind weitere Transportrollen 12, 13 angeordnet, die mittels des Hebels 28 aus einer Transportstellung in eine Schweißstellung gebracht werden können, und in der Transportstellung die Antriebs- und Andrückrolle 11 vom Boden anheben.

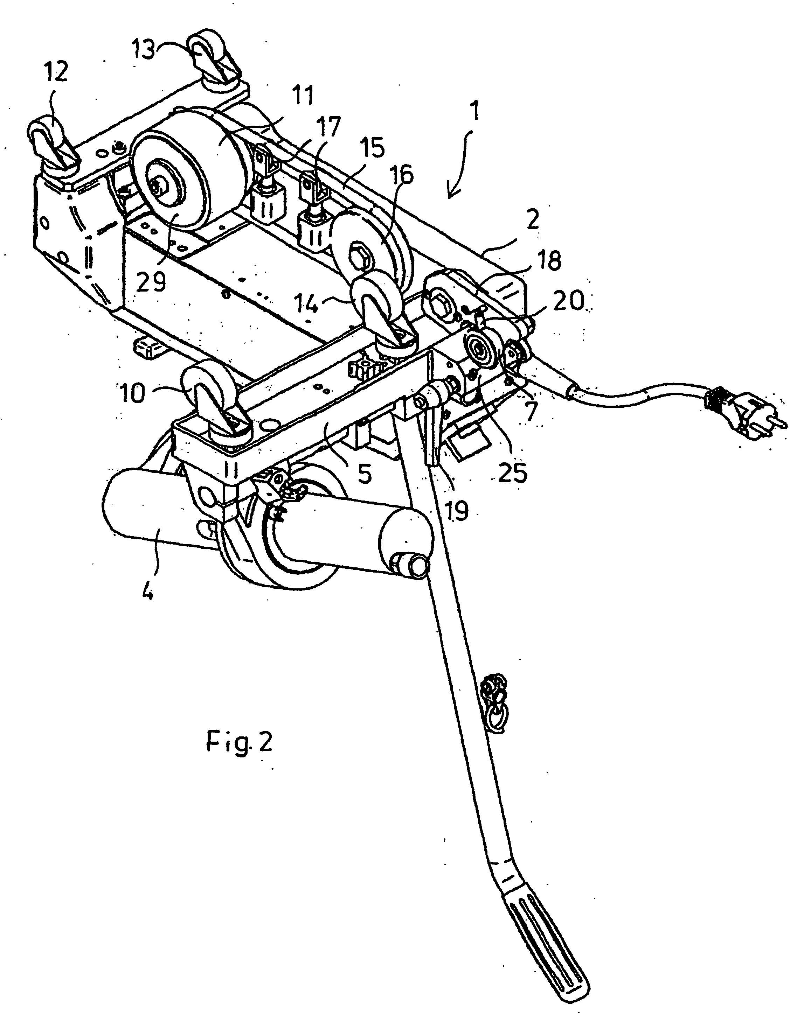

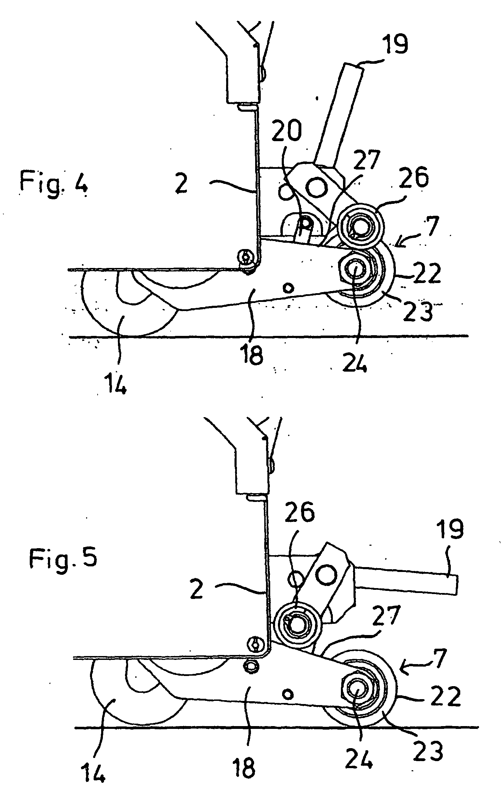

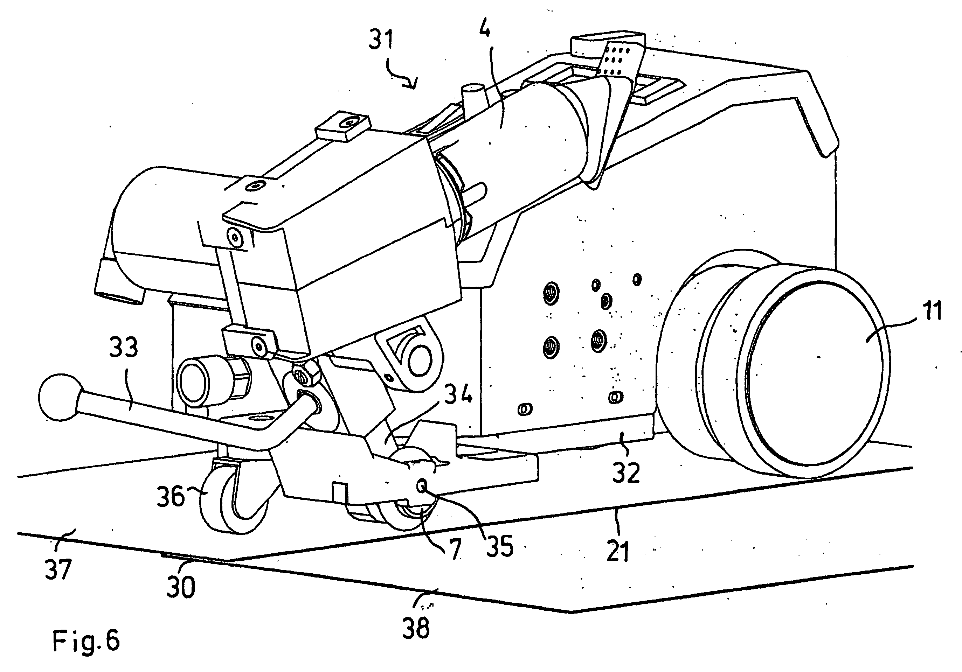

Figur 2 zeigt die Unterseite des Fahrgestells 2 mit den Transportrollen 12, 13 im hinteren Bereich und den Transportrollen 10, 14 am Fahrgestellarm 5. Alle Transportrollen 10, 12 bis 14 sind als freibewegliche Lenkrollen ausgebildet. Die Figur zeigt außerdem die Antriebs- und Andrückrolle 11, die über einen Riemen: 15 eine Umlenkrolle 16 antreibt. Der Antriebsriemen 15 wird außerdem über federnd gelagert Niederhalterollen 17 geführt: Das Führungsrad 7 ist an einem Schwenkarm 18, der an dem Fahrgestell 2 beweglich gelagert ist, gelagert. Mittels des an der Halterung 25 angebrachten Hebels 19 kann, wie nachfolgend in Verbindung mit den Figuren 4 und 5 noch gezeigt wird, das Führungsrad 7 aus der Transportstellung in die Schweißstellung gebracht werden. Die Feder 20 bewirkt die Rückstellung des Schwenkarms 18 aus der Schweißstellung in die Transportstellung. In der Figur 2 ist das Führungsrad in der Transportstellung dargestellt. In der Schweißstellung bewirkt das Führungsrad 7 ein Anheben des Fahrgestells, so dass die Transportrolle 14 den Bodenkontakt verliert und der Schweißautomat auf dem Führungsrad 7, der Transportrolle 10 und der Antriebseinrichtung bestehend aus der Antriebs- und Andrückrolle 11, dem Antriebsriemen 15 und der Umlenkrolle 16, aufliegt.

Figur 3 zeigt eine vergrößerte Darstellung der Führungseinrichtung 6 mit dem Führungsrad 7. Gegenüber der Figur 2 ist der Hebel 19 umgelegt, so dass das Führungsrad 7 fest auf dem Boden liegt und entlang der Kante 21 verfährt. Das Führungsrad 7 weist eine schmale Lauffläche 22 auf, wobei die Dicke des Führungsrades in dem Bereich 23 zur Auflagefläche 22 hin abnimmt. Das Führungsrad 7 ist über eine Achse 24 an dem Schwenkarm 18 befestigt.

In den Figuren 4 und 5 ist die Führungseinrichtung 6 in vergrößerter Darstellung von der Seite dargestellt. Sie zeigen die an dem Fahrgestell 2 befestigte Halterung 25 mit dem Schwenkhebel 18, der über die Feder 20 nach oben gezogen wird, so dass das Führungsrad 7 vom Boden abgehoben ist und das Fahrgestell 2 auf der Transportrolle 14 läuft. Durch Bewegen des Hebels 19 wird die mit dem Hebel 19 in Verbindung stehende Rolle 26 auf der Fläche 27 des Schwenkarms 18 bewegt. Infolge des vorgegebenen Abstandes der Rolle 26 von der Drehachse des Hebels 19 wird das Führungsrad 7 auf den Boden gedrückt und dadurch das Fahrgestell 2 leicht angehoben, so dass die Transportrolle 14 den Bodenkontakt verliert.

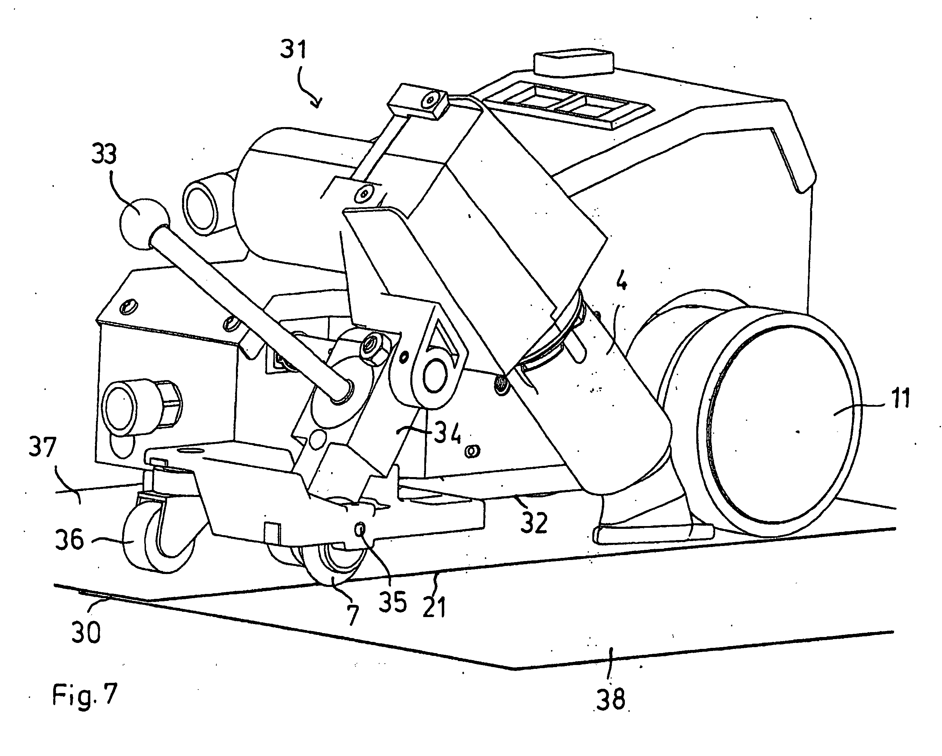

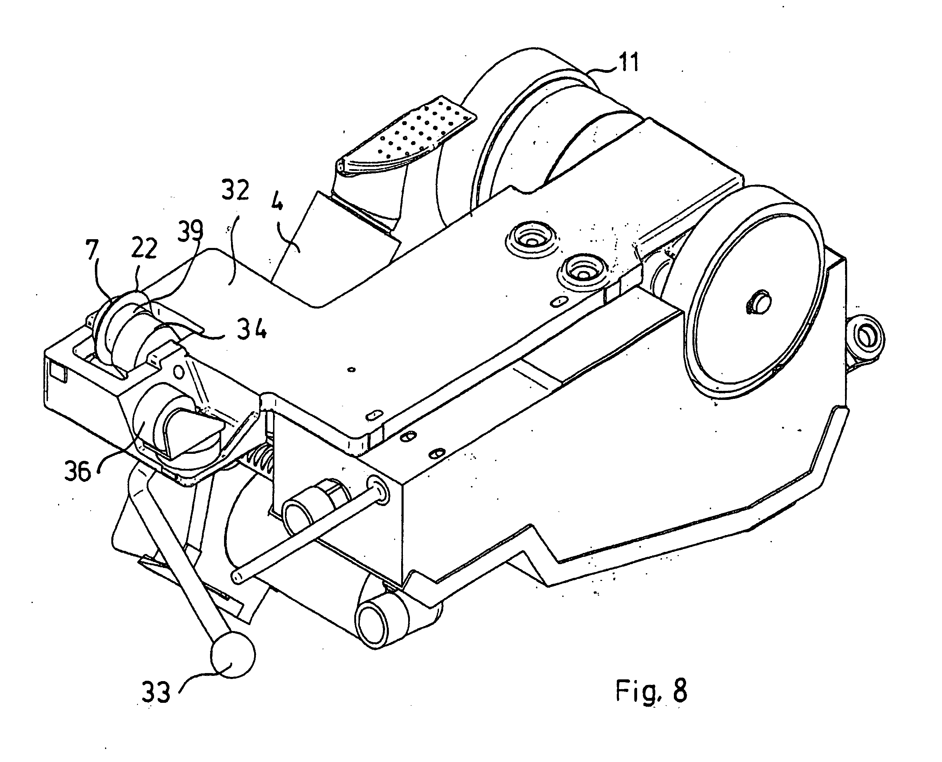

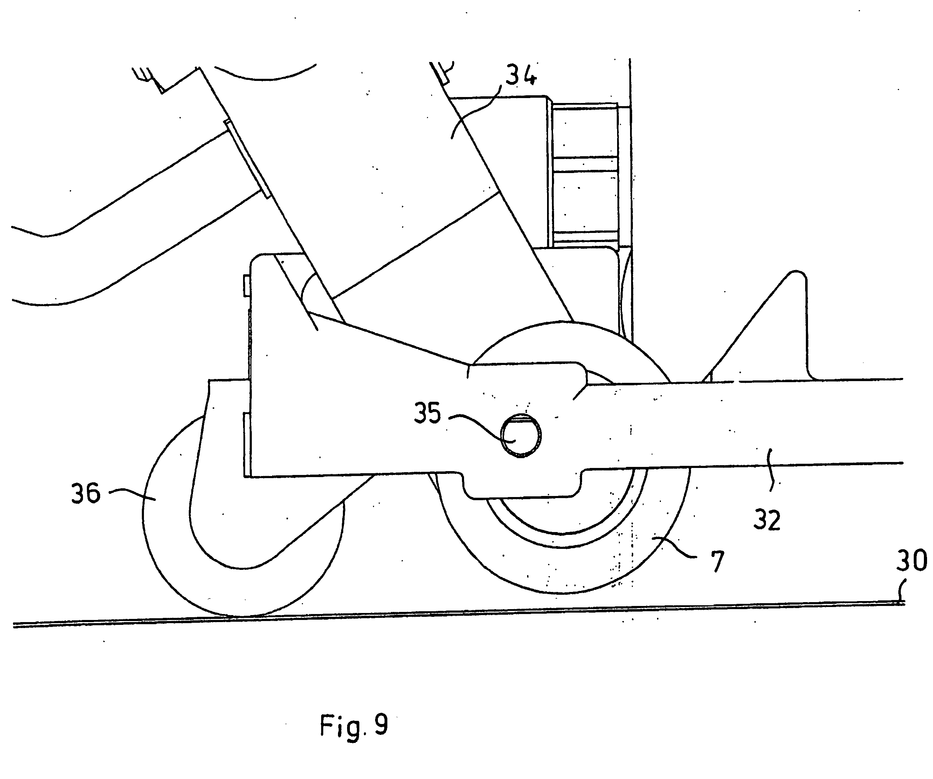

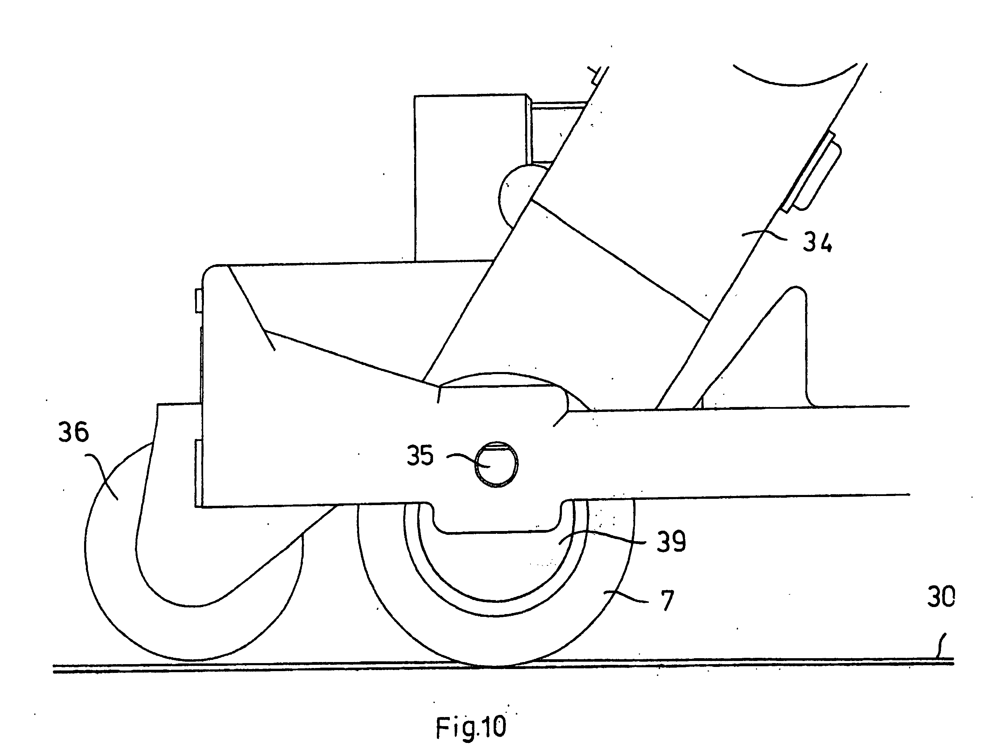

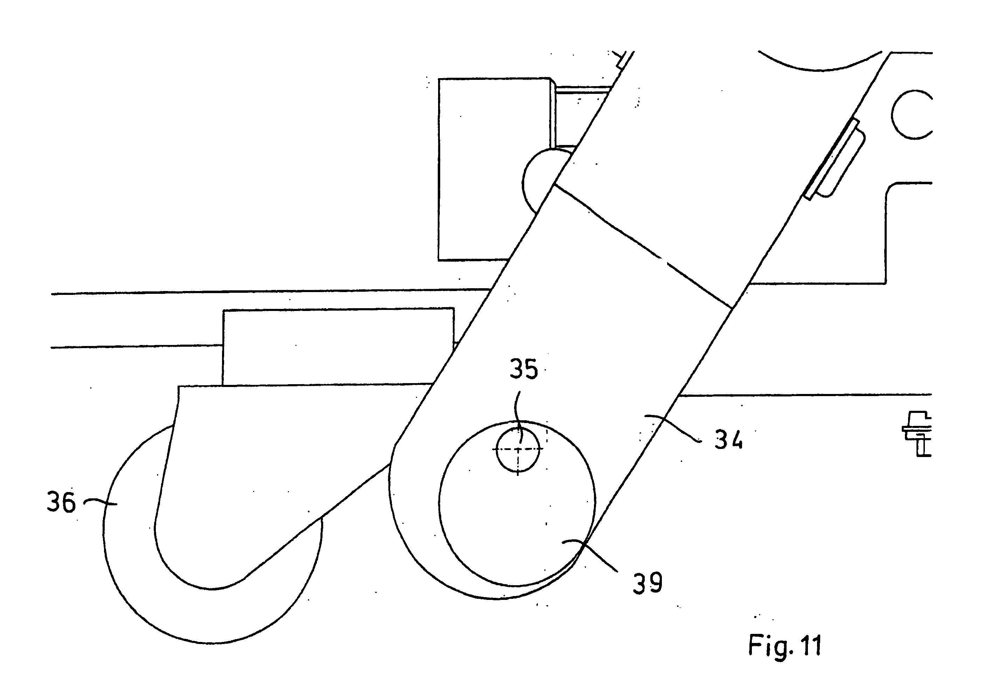

In dem Ausführungsbeispiel in den Figuren 6 bis 11 sind mit dem ersten Ausführungsbeispiel in den Figuren 1 bis 5 identische Teile mit gleichen Bezugsziffem versehen. Bei dem Schweißautomat 31 gemäß den Figuren 6 und 7, der bevorzugt zum Verschweißen von Kunststofffolien eingesetzt wird, befindet sich die Schweißeinrichtung 4 direkt an dem Fahrgestell 32 und wird mittels eines Hebels 33 über einen Schwenkarm 34, der um eine Achse 35 am Fahrgestell 32 schwenkbar ist, von der Transport- oder Ruhestellung in Figur 6 in die Schweißstellung in Figur 7 gebracht. Gleichzeitig wird dabei das Führungsrad 7, das gegenüber dem Schwenkarm 34 über den Radträger 39 exzentrisch angeordnet ist, über eine Kreisbahn in vertikaler Richtung bewegt und hebt dabei die Transportlenkrolle 36 vom Boden ab. Dies ist auch aus den Figuren 8 bis 11 ersichtlich. Das Führungsrad 7 läuft dann entlang der Kante 21 der oberen Folie 37 auf der unteren Folie 38.

Bei beiden Ausführungsbeispielen ist das Führungsrad 7 in Bezug zu der im wesentlichen auf dem verschweißten Überlappungsbereich 30 laufenden Andrückrolle 11 derart angeordnet ist, dass es beim Schweißen entlang der Kante 21 des oberen Kunststoffmaterials 8, 37 auf dem unteren Kunststoffmaterial 9, 38 entlang läuft. Die Achse des Führungsrades 7 und der Andrückrolle 11 sind parallel zueinander angeordnet und beim Schweißen senkrecht zur Kante 21 des oberen Kunststoffmaterials 8, 37 auszurichten.

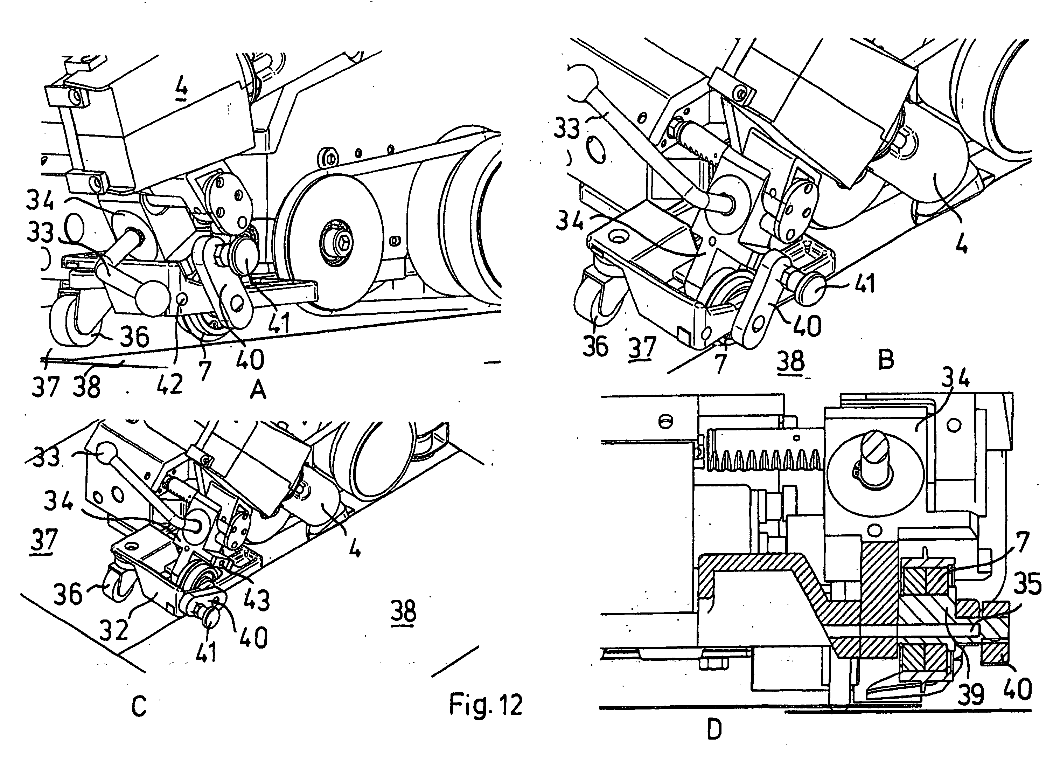

In der Figur 12 ist ein Ausführungsbeispiel eines Schweißautomats dargestellt, bei dem gegenüber den Ausführungen in den vorangegangenen Figuren ein zusätzlicher Hebel 40 vorgesehen ist, der mit dem exzentrisch auf der Achse 35 gelagerten Radträger 39 verbunden ist (Figur 12 D). Der Hebel 40 ist mittels eines federgelagerten Stiftes 41 in einer Bohrung 42 an dem Schwenkarm 34 bzw. in einer Bohrung 43 am Fahrgestell 32 arretierbar. Mittels des Hebels 40 kann das Führungsrad 7 auch in der Schweißstellung (Figur 12 C) von dem Schwenkarm 34 entkoppelt werden, so dass der Schweißautomat in diesem Bereich auf der Transportlenkrolle 36 aufliegt: Damit ist es möglich, auch Kurven zu fahren, was bei bestimmten Anwendungen erforderlich ist. Figur 12 A zeigt den Schweißautomat in der Transportstellung mit hochgeklappter Schweißeinrichtung 4. Der Schweißautomat wird vorne von der Transportlenkrolle 36 getragen; das Führungsrad 7 berührt die Folie 38 nicht. Figur 12 B zeigt den Schweißautomat in Schweißstellung; das Führungsrad 7 läuft auf der Folie 38. In beiden Fällen ist der Hebel 40 an dem Schwenkarm 34 arretiert. In der Figur 12 C ist gegenüber der Figur 12 B der Hebel 40 an dem Fahrgestell 32 arretiert. Dadurch wird der exzentrisch gelagerte Radträger 39 gedreht und das Führungsrad 7 von der Folie 38 nach oben wegbewegt, so dass die Transportlenkrolle 36 wieder das Gewicht übernimmt. Damit wird mit einfachen und kostengünstigen Mitteln eine universelle Anpassung der Führungsrolle auf die verschiedenen Anwendungsfälle ermöglicht.

## Patentansprüche

1. Schweißautomat für flächige Kunststoffmaterialien mit einem Fahrgestell (2) und daran angeordneter Schweißeinrichtung (4), Antriebseinheit (11, 15 bis 17), Andrückeinrichtung (11) für die überlappend zu verschweißenden Materialien (8, 9; 37, 38), **dadurch gekennzeichnet, dass** das Fahrgestell (2, 32) in der Schweißstellung außer von der Antriebseinheit und der Andrückeinrichtung (11, 15 bis 17) zumindest von einem starren Führungsrad (7) getragen wird, wobei das Führungsrad (7) in Bezug zu einer im wesentlichen auf dem verschweißten Überlappungsbereich (30) laufenden Andrückrolle (11) derart angeordnet ist, dass es beim Schweißen parallel der Kante (21) des oberen Kunststoffmaterials (8,. 37) auf dem unteren Kunststoffmaterial (9, 38) entlang läuft.

2. Schweißautomat nach Anspruch 1, **dadurch gekennzeichnet, dass** das Führungsrad (7) eine schmale Lauffläche (22) aufweist.

3. Schweißautomat nach Anspruch 1 oder 2 mit Transportrollen (10, 12 bis 14; 36), **dadurch gekennzeichnet, dass** das Führungsrad (7) gegenüber dem Fahrgestell (2) in vertikaler Richtung verstellbar ist, um das Fahrgestell (2) zusammen mit der als nächste angeordnete Transportrolle (14, 36) anzuheben.

4. Schweißautomat nach Anspruch 3, **dadurch gekennzeichnet, dass** das Führungsrad (7) an einem um eine Achse schwenkbar gelagerten Schwenkarm (18) gelagert ist und zumindest in der Schweißstellung am Fahrgestell (2) fixierbar ist.

5. Schweißautomat nach einem der vorangegangenen Ansprüche, **dadurch gekennzeichnet, dass** bei einem Fahrgestell (2) mit seitlichen Fahrgestellarm (5) für die Schweißeinrichtung (4) seitlich des Führungsrades (7) an dem Fahrgestellarrn (5) eine Transportlenkrolle (10) angeordnet ist.

6. Schweißautomat nach Anspruch 3, **dadurch gekennzeichnet, dass** das Führungsrad (7) gegenüber der Drehachse (35) eines am Fahrgestell (32) angeordneten Schwenkarmes (34) exzentrisch gelagert ist.

7. Schweißautomat nach einem der vorangegangenen Ansprüche, **dadurch gekennzeichnet, dass** das Führungsrad (7) dem Fahrgestell (2, 32) vorgelagert ist.

## Claims

1. An automatic welding machine for planar plastic materials, having a chassis (2) and, arranged thereon, a welding device (4), a driving unit (11, 15 to 17), a pressure device (11) for the materials (8, 9; 37, 38) to be welded in an overlapping manner, **characterised in that** the chassis (2, 32), in the welding position, in addition to being carried by the driving unit and the pressure device (11, 15 to 17), is carried at least by one rigid guide wheel (7), the guide wheel (7), with respect to a pressure roller (11) running essentially on the welded overlap region (30), being arranged in such a way that, during the welding, it runs along the bottom plastic material (9, 38) parallel to the edge (21) of the top plastic material (8, 37).

2. The automatic welding machine as claimed in claim 1, **characterised in that** the guide wheel (7) has a narrow running surface (22).

3. The automatic welding machine as claimed in claim 1 or 2, having transport rollers (10, 12 to 14; 36), **characterised in that** the guide wheel (7) is adjustable in the vertical direction relative to the chassis (2) in order to lift the chassis (2) together with the nearest transport roller (14, 36).

4. The automatic welding machine as claimed in claim 3, **characterised in that** the guide wheel (7) is mounted on a swivel arm (18) mounted such that it can be swiveled about an axis and can be fixed on the chassis (2) at least in the welding position.

5. The automatic welding machine as claimed in one of the preceding claims, **characterised in that**, in the case of a chassis (2) having a lateral chassis arm (5) for the welding device (4) to the side of the guide wheel (7), a transport steering roller (10) is arranged on the chassis arm (5).

6. The automatic welding machine as claimed in claim 3, **characterised in that** the guide wheel (7) is mounted eccentrically relative to the rotation axis (35) of a swivel arm (34) arranged on the chassis (32).

7. The automatic welding machine as claimed in one of the preceding claims, **characterised in that** the guide wheel (7) is located in front of the chassis (2, 32).

## Revendications

1. Machine automatique à souder pour plaques de matière plastique, comprenant un châssis (2) sur lequel sont placés un dispositif de soudure (4), une unité d'entraînement (11, 15 à 17), un dispositif presseur (11) pour les plaques de matière plastique (8, 9 ; 37, 38) à souder entre elles à l'endroit où elles se chevauchent, **caractérisée en ce que** le châssis (2, 32) en position de soudure est porté, outre par l'unité d'entraînement et le dispositif presseur (11, 15 à 17), au moins par une roue de guidage rigide (7), sachant que la roue de guidage (7) est disposée par rapport à un galet presseur (11) roulant essentiellement sur la zone de chevauchement soudée (30) de manière à ce que, lors de la soudure, elle avance sur la plaque de matière plastique inférieure (9, 38) parallèlement à l'arête (21) de la plaque de matière plastique supérieure (8, 37).

2. Machine automatique à souder selon la revendication 1, **caractérisée en ce que** la roue de guidage (7) présente une étroite surface de roulement (22).

3. Machine automatique à souder selon la revendication 1 ou 2, équipée de roulettes de transport (10, 12 à 14 ; 36), **caractérisée en ce que** la roue de guidage (7) est réglable verticalement par rapport au châssis (2) afin de soulever le châssis (2) avec la roulette de transport (14, 36) disposée le plus près.

4. Machine automatique à souder selon la revendication 3, **caractérisée en ce que** la roue de guidage (7) est montée sur un bras pivotant (18) monté de façon à pouvoir pivoter autour d'un axe et peut être immobilisée sur le châssis (2) au moins dans la position de soudure.

5. Machine automatique à souder selon l'une des revendications précédentes, **caractérisée en ce que**, dans le cas d'un châssis (2) équipé d'un bras latéral (5) pour le dispositif de soudure (4), une roulette de transport orientable (10) est disposée sur le bras latéral (5) du châssis, à côté de la roue de guidage (7).

6. Machine automatique à souder selon la revendication 3, **caractérisée en ce que** la roue de guidage (7) est montée de façon excentrée par rapport à l'axe de rotation (35) d'un bras pivotant (34) disposé sur le châssis (32).

7. Machine automatique à souder selon l'une des revendications précédentes, **caractérisée en ce que** la roue de guidage (7) est disposée devant le châssis (2, 32).
